Europäisches Patentamt

European Patent Office

Office européen des brevets

(11) Veröffentlichungsnummer: **0 072 497**
A2

(12) # EUROPÄISCHE PATENTANMELDUNG

(21) Anmeldenummer: 82107053.9

(51) Int. Cl.³: **G 03 B 27/52**
**G 03 B 27/46**

(22) Anmeldetag: 04.08.82

(30) Priorität: 05.08.81 DE 3131043

(43) Veröffentlichungstag der Anmeldung:
23.02.83 Patentblatt 83/8

(84) Benannte Vertragsstaaten:
CH GB LI SE

(71) Anmelder: COMPUTER GESELLSCHAFT KONSTANZ
MBH
Max-Strohmeyer-Strasse 116
D-7750 Konstanz(DE)

(72) Erfinder: Rehm, Karl
Fischerstrasse 11
D-7750 Konstanz(DE)

(72) Erfinder: Fuchs, Christian
Beyerlestrasse 21
D-7750 Konstanz(DE)

(72) Erfinder: Schwarz, Hermann
Keplerweg 4
D-7750 Konstanz(DE)

(72) Erfinder: Hug, Fritz
Bärlappweg 20
D-7750 Konstanz(DE)

(74) Vertreter: Mehl, Ernst, Dipl.-Ing. et al,
Postfach 22 01 76
D-8000 München 22(DE)

(54) Prismenkörper für eine Mikrofilmeinrichtung.

(57) Bei dem im Strahlengang zwischen Lichtquelle (1) und Objekt (2) einerseits sowie zwischen Objekt (2) und Aufnahmekamera (3) andererseits vorgesehenen Prismenkörper (4) sind die Lichteintrittsfläche (7) und/oder die ihr zugeordnete Lichtumlenkeinrichtung (10) hinsichtlich der Objektfläche (11) derart ausgerichtet, daß der einfallende Lichtstrahl (LS) in einem Einfallswinkelbereich größer 0° und kleiner Grenzwinkel auf die Objektfläche (11) auftrifft.

FIG 1

EP 0 072 497 A2

Computer Gesellschaft
Konstanz mbH
Max-Stromeyer-Str. 116
7750  Konstanz

Unser Zeichen

VPA

81 P 8 0 3 1 .E

Prismenkörper für eine Mikrofilmeinrichtung

Die Erfindung bezieht sich auf einen im Strahlengang einer Mikrofilmeinrichtung zwischen Lichtquelle und Objekt einerseits, sowie zwischen Objekt und Aufnahmekamera andererseits vorgesehener Prismenkörper mit auf einer Seite des Prismas benachbart angeordneten Lichteintritts- und Austrittsflächen und diesen jeweils zugeordneten Lichtumlenkeinrichtungen, sowie einer im gegenüberliegenden Prismenbereich parallel zum Objekt verlaufenden Objektfläche.

Mikrofilmeinrichtungen werden beispielsweise zur Informationssicherung bei der automatischen Belegverarbeitung verwendet, wobei die einzelnen Belege eines kontinuierlich durchlaufenden Belegstapels mit Hilfe einer Fließbandkamera ohne Eingriff in den normalen Belegfluß nacheinander auf dem proportional zur Belegtransportgeschwindigkeit bewegbaren Filmmaterial gespeichert werden. Die Anwendung des Fließbandverfahrens bei Hochleistungsbeleglesern setzt allerdings eine entsprechend hohe Beleuchtungsstärke an der Aufnahmestation voraus mit der Folge, daß durch die sehr lichtstarken Lichtquellen eine relativ hohe Wärmeverlustleistung entsteht. Um die Wärmeausstrahlung im Bereich der Aufnahmestation möglichst gering zu halten, wird deshalb bei einer bekannten Mikrofilmeinrichtung die Lichtquelle in einem genügend großen Abstand zum Aufnahmeobjekt angeordnet. Die aus der DE-AS 28 10 282 bekannte Mikrofilmeinrichtung weist ferner mehrere, im Strahlengang zwischen Lichtquelle, Belegfläche und Aufnahmekamera angeordnete Umlenkeinrichtungen auf,

Sta 1 Stl / 23.07.81

die in Form von Spiegelflächen ausgebildet sind. Diese Spiegelflächen wiederum werden durch Begrenzungsflächen eines gemeinsamen Prismenkörpers gebildet. Sie sind damit einander starr zugeordnet, so daß Maschinenerschütterungen oder Temperaturschwankungen praktisch keine nachteiligen Auswirkungen auf die Bildqualität nach sich ziehen. Die Verwendung eines gemeinsamen Prismenkörpers für den Lichtweg von der Lichtquelle zur Aufnahmestation einerseits sowie für den Bildweg zwischen Aufnahmestation und Aufnahmekamera andererseits schafft indessen ein neues Problem, weil die dem Aufnahmeobjekt zugekehrte Prismenfläche z.B. durch Fingerabdrücke, Staub, Druckfarbenabrieb od.dgl. erfahrungsgemäß nicht immer ganz sauber gehalten werden kann. Dies führt dann dazu, daß der Lichtstrahl zum Teil bereits auf dieser Prismenfläche reflektiert wird mit der Folge, daß die Heizwendel der Lichtquelle als reflektiertes Bild zur Aufnahmekamera gelangt und dort eine entsprechende Störung des Aufnahmebildes verursacht.

Der vorliegenden Erfindung liegt nun die Aufgabe zugrunde, eine Mikrofilmeinrichtung mit einem im Strahlengang vorgesehenen Prismenkörper in der Weise zu verbessern, daß unerwünschte Einblendungen in das Aufnahmebild aufgrund von Reflexionen an der Objektfläche des Prismenkörpers weitgehend vermieden werden.

Diese Aufgabe wird bei einem Prismenkörper der eingangsnäher bezeichneten Art erfindungsgemäß dadurch gelöst, daß die Lichteintrittsfläche und/oder die ihr zugeordnete Lichtumlenkeinrichtung hinsichtlich der Objektfläche derart ausgerichtet sind, daß der einfallende, den Prismenkörper passierende Lichtstrahl in einem Einfallswinkelbereich größer $0^o$ und kleiner Grenzwinkel

0072497

auf die Objektfläche auftrifft.

Vorteilhafte Weiterbildungen des Erfindungsgedankens
sind in den Unteransprüchen angegeben.

Im folgenden werden zwei Ausführungsbeispiele der Erfindung anhand der Zeichnung näher erläutert. Es zeigen

FIG 1     den Strahlengang einer Mikrofilmeinrichtung
          mit einem gemäß der Erfindung ausgebildeten
          Prismenkörper in schematischer Darstellung

FIG 2     eine weitere Ausführungsform für einen gemäß
          der Erfindung ausgebildeten Prismenkörper in
          Seitenansicht.

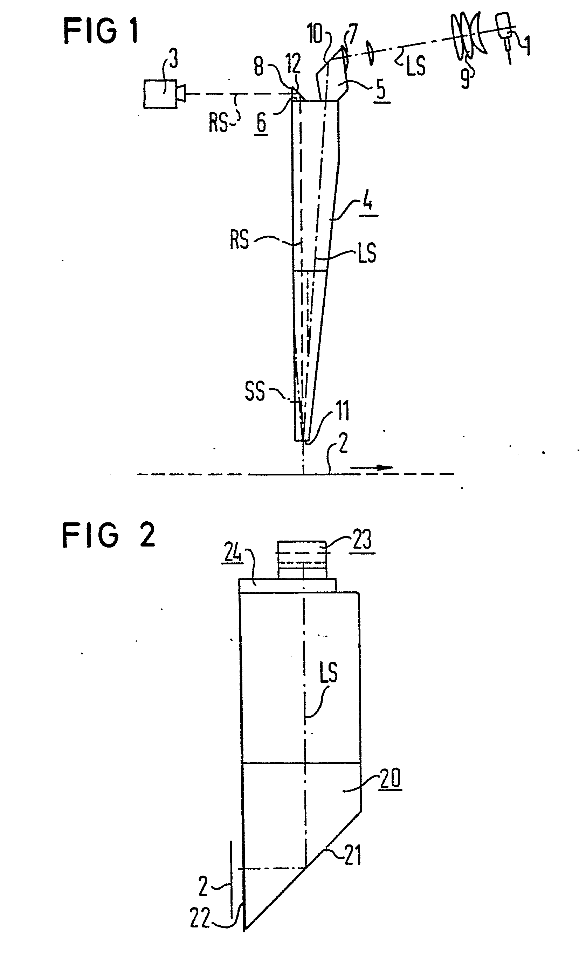

Die FIG 1 zeigt den schematischen Aufbau einer Mikrofilmeinrichtung, wie sie beispielsweise zur Informationssicherung bei der automatischen Belegverarbeitung
verwendet wird. Im Strahlengang dieser Mikrofilmeinrichtung ist zwischen Lichtquelle 1 und einem Objekt,
im vorliegenden Beispiel eine in Pfeilrichtung bewegten Beleg 2, sowie zwischen Beleg 2 und Aufnahmekamera
3 ein für beide Strahlrichtungen gemeinsamer Prismenkörper 4 vorgesehen. Dieser Prismenkörper 4 weist
an seiner Oberseite zwei einander gegenüberliegend angeordnete Spiegelprismen 5, 6 auf, deren jeweils der
Lichtquelle 1 bzw. der Aufnahmekamera 3 zugekehrte
Begrenzungsflächen als Lichteintritts- bzw. Austrittsflächen 7, 8 dienen. Der einfallende, mittels Kondensorlinsen 9 gebündelte Lichtstrahl LS wird dabei an
der Spiegelfläche 10 des Spiegelprismas 5 zur Unterseite des Prismenkörpers 4 hin umgelenkt, wobei die
Spiegelfläche 10 so ausgerichtet ist, daß der umgelenkte Lichtstrahl in einem Einfallswinkelbereich $> 0^{o}$

**0072497**

und < Grenzwinkel auf die Objektfläche 11 auftrifft. Die auf der an der Unterseite des Prismenkörpers 4 vorgesehene schmale Bodenfläche bildet ein sogenanntes Aufnahmefenster und verläuft als Objektfläche 11 parallel zur Transportebene des Beleges 2. Der an der Objektfläche 11 auftretende Lichtstrahl LS fällt schließlich auf den Beleg 2, dringt als reflektierter Lichtstrahl RS wieder in den Prismenkörper 4 ein und tritt nach Umlenkung an der Spiegelfläche 12 des Spiegelprismas 6 an der Lichtaustrittsfläche 8 wieder aus. Durch den schräg auf die Objektfläche 11 einfallenden Lichtstrahl wird erreicht, daß ein an der Objektfläche möglicherweise reflektierter Anteil des einfallenden Lichtes gemäß dem Reflexionsgesetz: Einfallswinkel = Ausfallswinkel auch wieder entsprechend schräg zurückgeworfen und gegebenenfalls auf seinem Rückweg noch ein- oder mehrfach an den Seitenwänden des Prismenkörpers 4 reflektiert wird. Der auf diese Weise reflektierte Störstrahl SS fällt damit nicht mehr in den Strahlengang des am Objekt bzw. Beleg 2 reflektierten Abtaststrahls, so daß störende Einblendungen der an der Objektfläche reflektierten Lichtquellen-Heizwendel in das jeweilige Aufnahmebild praktisch ausgeschlossen werden. Der in FIG 1 dargestellte Prismenkörper 4 ist entsprechend dem Strahlengang keilförmig ausgebildet, wobei der einfallende Lichtstrahl LS und der reflektierte Lichtstrahl RS jeweils parallel oder zumindest annähernd parallel zu einer der beiden Keilflächen verlaufen. Die umlenkenden Spiegelflächen sind entsprechend der Anordnung von Lichtquelle 1 und Aufnahmekamera 3 außerdem so ausgerichtet, daß der einfallende Lichtstrahl LS von der einen Keilflächenseite her eindringt und der reflektierte Lichtstrahl RS auf der anderen Keilflächenseite austritt.

Der in FIG 2 dargestellte Prismenkörper 20 unterscheidet sich von der Ausführungsform gemäß FIG 1 im wesentlichen dadurch, daß die Bodenfläche 21 unter 45° abgeschrägt und als Spiegelfläche ausgebildet ist. Dadurch wird der einfallende Lichtstrahl LS zu der an einer Seitenfläche des Prismenkörpers 20 vorgesehenen Objektfläche 22 bzw. zu dem parallel zu dieser Objektfläche 22 geführten Beleg 2 umgelenkt. Die beiden Spiegelprismen 23, 24 mit den dazugehörigen Lichteintritts- und Austrittsflächen befinden sich auch hier an der Oberseite des Prismenkörpers 20.

6 Patentansprüche

2 Figuren

Patentansprüche

1. Im Strahlengang einer Mikrofilmeinrichtung zwischen Lichtquelle und Objekt einerseits, sowie zwischen Objekt und Aufnahmekamera andererseits vorgesehener Prismenkörper mit auf einer Seite des Prismas benachbart angeordneten Lichteintritts- und Austrittsflächen und diesen jeweils zugeordneten Lichtumlenkeinrichtungen, sowie einer im gegenüberliegenden Prismenbereich parallel zum Objekt verlaufenden Objektfläche, d a d u r c h g e k e n n z e i c h n e t , daß die Lichteintrittsfläche (7) und/oder die ihr zugeordnete Lichtumlenkeinrichtung (10) hinsichtlich der Objektfläche (11) derart ausgerichtet sind, daß der einfallende, den Prismenkörper (4) passierende Lichtstrahl (LS) in einem Einfallswinkelbereich größer 0$^o$ und kleiner Grenzwinkel auf die Objektfläche (11) auftrifft.

2. Prismenkörper nach Anspruch 1, g e k e n n z e i c h - n e t durch eine keilförmige Gestalt mit im Bereich der Keilspitze vorgesehener Objektfläche (11) und gegenüber der Keilspitze angeordneten Lichteintritts- und Austrittsflächen (7, 8).

3. Prismenkörper nach Anspruch 2, d a d u r c h g e - k e n n z e i c h n e t , daß die eine Keilfläche im wesentlichen parallel zur Strahlrichtung des einfallenden Lichtstrahls (LS) verläuft.

4. Prismenkörper nach Anspruch 3, d a d u r c h g e - k e n n z e i c h n e t , daß die zweite Keilfläche rechtwinklig zur Objektfläche (11) ausgerichtet ist, so daß der am Objekt reflektierte Lichtstrahl (RS) parallel zu dieser zweiten Keilfläche verläuft.

5. Prismenkörper nach einem der Ansprüche 2 bis 4, d a d u r c h   g e k e n n z e i c h n e t , daß die entlang der Keilspitze verlaufende Bodenfläche, bezogen auf eine der zwischen den beiden Keilflächen verlaufenden Seitenflächen unter 45° abgeschrägt ist und als Spiegelfläche für die an der Seitenfläche vorgesehene Objektfläche dient.

6. Prismenkörper nach einem der vorhergehenden Ansprüche, d a d u r c h   g e k e n n z e i c h n e t , daß die Lichteintritts- und Austrittsflächen (7, 8) Begrenzungsflächen je eines Spiegelprismas (5, 6) sind, dessen umlenkende Spiegelflächen (10, 12) so ausgerichtet sind, daß der einfallende Lichtstrahl (LS) von der einen Seite des Prismenkörpers (4) eindringt und der reflektierte Lichtstrahl (RS) auf der anderen Seite austritt.

1/1

FIG 1

FIG 2